**Europäisches Patentamt**

**European Patent Office**

**Office européen des brevets**

(19)

(11) Publication number: **0 021 017**
**B1**

(12) **EUROPEAN PATENT SPECIFICATION**

(45) Date of publication of patent specification: **25.01.84**

(51) Int. Cl.³: **B 29 D 31/00, B 29 C 17/10**

(21) Application number: **80102722.8**

(22) Date of filing: **16.05.80**

(54) **Process and device for the preparation of composite reticular structures.**

(30) Priority: **18.05.79 IT 2280079**
**18.05.79 IT 2280179**

(43) Date of publication of application:
**07.01.81 Bulletin 81/1**

(45) Publication of the grant of the patent:
**25.01.84 Bulletin 84/4**

(84) Designated Contracting States:
**AT BE CH DE FR GB LI LU NL SE**

(56) References cited:
**DE - C - 962 021**
**FR - A - 1 331 095**
**FR - A - 2 299 954**
**GB - A - 922 131**
**GB - A - 1 083 847**
**GB - A - 1 470 196**
**US - A - 3 454 455**
**US - A - 3 642 967**
**US - A - 3 730 821**

(73) Proprietor: **Montedison S.p.A.**
**Patents & Licensing Dept. Foro Buonaparte, 31**
**P.O. Box 10528**
**I-20121 Milan (IT)**

(73) Proprietor: **Moplefan S.p.A.**
**31, Foro Buonaparte**
**Milan (IT)**

(72) Inventor: **Vittone, Andrea, Dr.**
**6, Piazza Segrino**
**Milan (IT)**
Inventor: **Furia, Edoardo**
**86, Via Volterrana**
**La Romola (Firenze) (IT)**
Inventor: **Camprincoli, Pierpaolo, Dr.**
**73, Via Guglielmi**
**Terni (IT)**
Inventor: **Grondona, Adriano**
**8, Viale S. Gimignano**
**Milan (IT)**

(74) Representative: **Klingseisen, Franz, Dipl.-Ing.**
**Bräuhausstrasse 4**
**D-8000 München 2 (DE)**

Courier Press, Leamington Spa, England.

# 0 021 017

Process and device for the preparation of composite reticular structures

The invention concerns a process and a device for the preparation in a continuous run of composite reticular structures starting from films of synthetic polymers.

The fibrillation of the synthetic polymer films is an operation that has been known for quite some time and in general has been used in the manufacture of ropes, strings, textile staples, besides for obtaining flat reticular structures suited for use as reinforcement (stiffening) of laminated materials such as for instance: paper, cement slabs, non-woven fabrics, etc.

A process for the preparation of composite open-net shaped structures in accordance with the prior art portion of claim 1 is known from US—A—3 454 455 in which prepared films of synthetic polymer are uniaxially oriented by stretching and subsequently fibrilled by passing them along surfaces fitted with needles, blades or other means suitable for producing slits. The thus treated films are superimposed to form a laminate structure which then is subjected to transversal stretching in order to open the slits.

Since the crosswise stretching of the fibrilled films is a difficult and delicate operation, the continuous preparation of such composite structures requires at least two distinct operations. The first being the stretching and the second being a superimposition, carried out with lines of machines in an angled position to each other. The extreme lightness and delicacy of the material, the phenomenon of longitudinal shrinkage of the film during the stretching, as well as the poor resistance of the fibrils to longitudinal slip stresses are all elements that make the stretch-reticulation operation quite critical and thus hinder in this case the use of the conventional stretching or opening systems used in the textile field, such as clamps or pins supporting chains or other rigid traction elements of this kind.

A device for carrying out the opening or transversal stretching of a fibrilled film in accordance with the prior art portion of claim 6 is known from US—A—3 730 821 in which a film having a plurality of relatively thick filament-like rib sections interconnected by alternating relatively thin web sections is gripped by endless chains which diverge at a rate calculated to effect the desired degree of opening of the web to form a network structure.

It is the object of the invention to provide a process for the preparation in a continuous way of open composite reticulated structures which allows to use conventional stretching or opening systems. Further a device suited for the transversal opening in a continuous way should be provided.

The process according to the invention as claimed in claim 1 provides unfibrilled oblique bands of the film, which make the stretch-reticulation operation not so critical. The device as claimed in claim 6 is especially suited for the transversal opening of such a fibrilled film.

The preparation of the starting film may be carried out according to any one of the known film-making methods for synthetic polymers, such as for instance: by extrusion, casting, etc. Polymers usable for the purposes of this invention are olefinic polymers such as polyethylene and polypropylene, the polyamides, the vinylpolymers such as polyvinyl chloride, polyester resins, as well as the mixtures of said polymers.

The fibrillation of the oriented film is achieved by passing the film over rollers or, in general, on surfaces provided with either blades or pins or projections having an orderly and predetermined geometrical arrangement, such as to be reproduceable on the film in the form of slits.

Fibrillation methods of this type are described, for instance, in English Patent No. 1,073,741.

In Figure I, (A) represents, in the way of an example, an orderly pattern of slits in the film, while (B) shows the arrangement on the plane of the slitting elements (b), such as for instance the points of needles of a fibrilling roller.

Moreover:

(a)=the distance between 2 needles arranged on a generating line of the cylindrical roller,
(c)=distance between 2 needles arranged on adjacent circumferences of needles and also the distance between 2 adjacent slits.
(d)=the distance between adjacent generating lines of needles,
(e)=the length of a slit,
(f)=the unslitted stretch between two successive slits;
(g)=the stagger between the slits, that is, the distance between the starting or end points of two adjacent slits;
(h)=the width of the oblique unfibrilled band, consisting ideally of the oblique succession of the stretches of unslitted film;
$(\beta_0)$=the obliquity of such band, that is, the angle which said band displays in the not transversally stretched fibrilled film, with respect to the direction of the fibrillation of the film.

Such an angle will have a clockwise or counter clockwise direction and, thus, a positive or negative sign, with respect to the direction of the slitting of the film, depending on the respectively right-handed or left-handed arrangement of the needles.

O 021 017

The tangent of angle

$$\beta_o \frac{(c)}{(g)} = \frac{\text{distance between two adjacent slits}}{\text{stagger between slits}}$$

wherein the value (g) of the stagger between the slits may be pre-arranged, in the case of the use of fibrilling rollers, on the basis of the ratio

$$K = \frac{\text{advancement speed of the film}}{\text{peripheral speed of the pins on fibrilling roller}}$$

taking into account the relationship:

(g)=K times the distance between adjacent generating lines of needles (d).

Thus, angle $\beta_o$ of the oblique unfibrilled bands is easily pre-determined at will within the above indicated limits, with a suitable pattern of the fibrilling system, for instance on a needle roller, and with respect to the fibrilling procedures.

As already said, this invention envisages to fibrillate in such a way as to obtain angular values of $\beta_o$ comprised in the range of from about 0.30° to about 50°C. Typical values for the parameters previously defined are, for instance:

| | |
|---|---|
| (c)=0.1 mm | (c)=1.6 mm |
| (d)=25 mm | (d)=2.5 mm |
| K=0.70 | K=0.54 |
| $\beta_o$=0.33° | $\beta_o$=about 50° |

The fibrillation may be carried out with one or more superimposed films on the same fibrilling device or on the single separate films, each of which is fibrilled on a fibrilling device having a different needle distribution pattern, so as to obtain from the same fibrillation line the production of films with different $\beta_o$ angles, necessary for the manufacture of a reticulated and multi-oriented end product.

The superimposition of the fibrilled films is carried out in such a way as to get the oblique unfibrilled bands of each film not to coincide with each other but in such a way that said bands will form varied angles, in order to obtain a reticulated assembly endowed with characteristics that be as much as possible isotropic. The alternation with which the films are superimposed may be anyone wished, especially in the case of films which, although having different fibrilling patterns, show in the course of the successive stretchings out to a net, longitudinal shrinkages of the same order of magnitude, at equal transversal stretching.

Preferably, the pack obtained by the superimposition of the single fibrilled films, is welded at the edges so as to facilitate the successive operations.

The welding operation may also be carried out on the pack of stretched out and superimposed nets, successively trimming the molten edges.

The transversal stretching of the assembly of superimposed films may be preceded by an impregnation phase of the assembly with sizing and/or glueing products such as polyvinylacetate or an aqueous carboxymethylcellulose solution in order to render the product more solid and handlable and, at the same time, to favour its adhering to the products to be reinforced.

That impregnation may be achieved, for instance, by dipping, spraying or by passing the products between rollers, according to known methods.

Said impregnation may also be carried out, instead of on films before stretching, on already stretched out nets, with the above indicated methods. The transversal stretching of the pack of fibrilled films must be such as to produce a rotation of the oblique bands on the plane until they form with the direction of the film slitting a new angle $\beta_\epsilon$ with a value comprised between $\beta_o$ and 80°.

Theoretical considerations and experimental measurements show that between the transversal stretch values and the difference $(\Delta\beta)$ between $\beta_\epsilon$ and $\beta_o$, expressed in radians, there exists a relationship:

$$\Delta\beta = C \times (E-1)$$

wherein

$$E = \text{extent of stretch} = \frac{\text{final width of the film}}{\text{starting width of the film}}$$

and where C is a constant that depends on the distribution or layout of the slits in the fibrilled film, and that may also be determined experimentally on any type of such a film.

3

# O O21 O17

Thus, by properly choosing the values of $\beta_0$ and of the characteristical dimensions or sizes of the fibrilled film indicated in Figure I with (c), (e), (f) and (g), it is possible to obtain with the same extrusion E, a series of different values of $\beta_\epsilon$ for each type of fibrillation of the films, consequently obtaining a composite net of different layers, each having its own, predetermined angle of the non-fibrilled oblique bands.

Since, moreover, the rotation of the oblique non-fibrilled bands occurs always in the polar direction of the starting angle $\beta_0$, the stretching of films having starting angles $+\beta_0$ and $-\beta_0$, will lead in the stretched out net, to final angles $+\beta_\epsilon$ and $-\beta_\epsilon$, and, thus, to crossed angles. The combined reticular product thus obtained is, therefore, formed of layers of nets, which will display oblique unfibrilled bands arranged according to angles different in value and sign with respect to the direction of extrusion of the original film, and arranged (laid out) in any sort of alternating order or succession.

Once the transversal or cross stretching of the fibrilled film has been accomplished, the opened composite net thus obtained is stabilized dimensionally by thermal treatment that may consist in an inhibited (impeded) shrinkage passage through an oven or on a calender with heated pressure rolls at a temperature below that of softening of the polymer or polymers constituting the film. The net thus stabilized may be gathered in rolls or on reels ready for use.

The composite reticulated structures thus obtained are easy to handle, and the various layers or fibrilled films forming said structures may be welded to each other for use in lamination with other materials, or they may be loose for impregnation with liquid or pasty substances such as hydraulic binders, bituminous, waxy or pasty substances.

The process for their preparation, as described above, is simple and may be carried out without interruptions or discontinuities, from the polymer up to the finished product, at industrially convenient operation speeds, and allows to obtain a wide range of products as for weight, size, orientation and dimensions of the fibrils, and for the number of layers of fibrilled films.

Thus, the process can be used for the manufacture of composite open-net shaped structures endowed with unusually high surface area values, such as higher than $12 \ m^2/g \cdot \mu$, by starting from films containing blowing or expanding agents which are caused to expand before the subjecting the films to longitudinal orientation (2).

In this case the expansion operation is carried out following the conventional techniques of the prior art, depending on the type of expanding agent used. The quantity, granulometry, the type of expanding agent as well as the expansion conditions, should at any rate be chosen in such a way that the bubbles that form inside the film shall have a mean diameter not exceeding 50%, but preferably not exceeding 20% of the thickness of the film.

The expansion of the film may also be obtained by allowing liquids having boiling temperatures below the temperature of the molten polymer, to expand in the molten polymer in the presence of nucleating agents acting as expansion starters and regulators. Techniques of this kind are described, for instance, in Italian Pat. No. 841,148.

When the film is prepared by extrusion, at a temperature corresponding to or greater than the temperature at which the expanding agent becomes active, or if it is prepared according to procedures requiring the attainment of such a temperature, the expansion operation may be carried out contemporaneously with the film-preparation operation, provided that it is operated under strictly controlled conditions, such as to give place to the formation of microsized bubbles, uniformly distributed throughout the film, without compromising the integrity of this latter and, on the contrary, allowing its monoaxial stretching without ruptures.

According to another method, which may be used either alone or in combination with the one described above, composite open-net structures having such high surface area values can be obtained by subjecting the longitudinally oriented film obtained from operation, before the fibrillating step, to a superficial abrasion operation.

The abrasion operation may be achieved by rubbing the film between emery cloths, abrasive papers or grinding wheels, or also by sandblasting, rubbing between brushes, or by other such like methods.

The abrasion shall not, however, lead to fissuring or slitting of the film.

Once they have been obtained, the fibrillated or net-structured films of this invention may be made wettable by means of oxidative superficial treatments such as the known flame treatments or by high frequency electric discharges.

The net-opening device for fibrilled films that forms one of the objects of this invention, allows to obviate the difficulties so far met in this type of operation, and more particularly the drawbacks due to the phenomenon of longitudinal shrinkage of the fibrilled film, which occurs during its opening to form a net, and which leads easily to the rupture of the film when one tries to achieve openings of a certain amplitude, or to the distortion of the unfibrilled bands when the open is very limited. The device that forms one of the objects of this invention, allows to overcome such drawbacks and may be used either for the opening of the single fibrilled films as well as for the opening of a combination of superimposed fibrilled films, and for their continuous transformation into open reticulated composite structures.

4

In Figure II are respectively illustrated: a side view (A) and a plan view (B) of a particular embodiment of the device according to this invention.

In said figure are shown: the feeding device (1) for the fibrilled film or for the pack of superimposed fibrilled films, which device may consist of a pair or a series of driving rollers; a pair of guides (2) which in this specific case, at the start are parallel and distance from each other by a length $L_o$, and which then become diverging from each other up to a distance between them $L_1$; the clamps (3), provided with teeth (9) designed to mesh with the links of the conveyor chain (6); the feeders (4), which in this specific case consist of wheels with cavities which pick up the clamps and insert them on the guides, at a mutual distance $p_o$; a device (8) which opens the clamps so that they may grip the film; a set of two stud chains (6) which act as driving or drawing means (E) which engage the teeth of the clamps at the engaging point (10), and which are driven by motor (7) in the direction of the feeding of the film; a device (13) which opens the clamps so that these will release the film or pack of stretched films, and which, by the upper part of chains (6), will then carry them back to the feeding device (4); the winding up device (11) for gathering the film or pack of extruded films.

From the aforesaid it thus results that the film or pack of fibrilled films enter guides (2), is then grasped by the sliding clamps (3) initially distanced from each other by a distance $p_o$, is thereupon forced to expand in the widening stretch of the guides (2) up to a width $L_1$, necessary to bring the value of the angle of the unfibrilled bands to the desired value.

Since the fibrilled film is dragged by the clamps only beginning from the insertion (10) of the chains (6) onward, the film will be free to shrink longitudinally along the whole stretch in which it is subjected to a transversal stretching, thereby drawing closer to each other the clamps (3) themselves.

The pair of guides (2) may diverge from each other at equal or different angles with respect to the longitudinal axis of the device.

The relationship

$$\frac{L_1}{L_o}$$

between their maximum and minimum distance constitutes the stretch ratio of the film. The clamps, free to slide along the guides, are operated by a spring and, in the device illustrated in Fig. II, are always in the closed position; they only open upon command, through devices (8) and (13) which may be, for instance, especially shaped cams according to techniques well known to the skilled in the art.

If one wishes or it becomes necessary to stabilize dimensionally the reticular shape of the stretched film or pack of films before their winding up, a heating apparatus (5), for instance operating on either hot air or by radiating energy, may be inserted into the device of this invention, between the engaging point (10) and the clamp opening device (13).

A regulating device (12) for the longitudinal tension of the film is preferably inserted between the feeding device (1) and the insertion of the film between the guides (2).

Said device serves to maintain constant and at the lowest possible values the longitudinal tension of the film at the inlet of guides (2), so as to allow the successive shrinkage due to the transversal extension or stretching.

At the outlet of the opening and thermo-stabilizing devices, before the clamp opening device (13), there may be arranged in series equipment for the welding of the edges of the nets as well as device for the hot compression and cohering of the packs of stretched nets.

More particularly, the hot compressing (or calendering) operation of the pack of stretched nets may be necessary because the extension or stretching causes a distortion of the shorter fibrils of the net, which then leave the planar arrangement (stick out of the planar disposition). This sticking out is partly a favourable element since it acts as a natural link between the layers of nets which are thereby bonded to each other, but at the same time it increases the apparent volume of the nets, a fact that may be a disadvantage in impregnation processes of the nets with liquid or pasty products.

The compression operation, even if not always necessary, and not indicated in Fig. II, has the purpose of reducing the apparent volume and at the same time to impart greater cohesion to the layers to each other, by fixing in a permanent way mutual interlinkages amongst the secondary distorted fibrils.

The compressing (or calendering) is carried out according to known methods between pairs of heated rollers or bands, at temperatures below those of the softening of the polymer used.

Depending on the use to which the nets are destined to, the compression may be carried out at a pressure of between 0.05 and 2 Kg/sq.cm. Lastly, the winding up or gathering device (11) may consist of a series of reels on which the reticulated product is gathered by winding up, or it may consist of a support of paper, film, fabric or of other similar materials.

The particular type of machine illustrated in Fig. II, may be realized in different variants, provided that there will be satisfied the possibility of a longitudinal shrinkage of the film during its opening, and, moreover, to maintain the stretching (extension) of the film, without interruptions or discontinuities

**0 021 017**

between the stretching and the thermostabilization phases, which would cause the net to lose, in an uncontrollable way, part of the acquired extension or stretch.

In the following are given for exemplifying purposes, but without any limiting effects, a few variants of embodiment of this invention:

— the clamps may be so built as to remain always closed, like in example of Fig. II: in that case, device (8) must open them in order to allow the film to pass through them, or they may be built in such a way as to be always open, wherefore along guides (2), in the opening and in the thermostabilization of the slitted film, there must be provided devices, for instance, suitably profiled cams suited for keeping the clamps closed;

— the opening and closing of the clamps may be carried out by means of electromagnetic, hydraulic or pneumatic systems instead of mechanical one, following the techniques known to the skilled in the art;

— the clamps may be substituted by systems of needles or pins penetrating the fibrous structure;

— the pulling devices defined under point (E) may consist, besides of chains, also of electromagnetic, pneumatic or hydraulic pulling systems;

— with reference to Fig. II, device (4) for the periodical feeding of the clamps to the guides (2), which in said figure is represented as a toothed driving wheel comprising, as opening device (8), a fixed cam for the opening by pressure of the clamps, may be realized with known techniques also with other systems such as for instance with electromagnetic impulse-controlled pusher or a hydraulic or pneumatic, intermittently working system;

— with reference to Fig. II, devices (8) and (13) for the opening of the clamps, which in said figure consist of a simple fixed cam, may be realized by known techniques in other forms of embodiment, such as for instance electromagnetic systems controlled by a microswitch that is in contact with the arriving (incoming) clamps, or by means of hydraulic or pneumatic systems.

The following examples are just given for illustrating and not limiting purposes to more clearly illustrate the inventive idea.

Example 1

On a tubular film extruder there was produced a polypropylene film, using a polymer with a M.I.=6.7 and with a melt temperature of 165°C.

The film was 120 micron thick and was stretched longitudinally at a temperature of 150°C and with a drawing ratio of 9.

The film thus obtained, 40 micron thick and 80 cm wide, after the cutting of the selvedges, was subdivided into 4 films, each 20 cm wide.

The 4 films were, thereupon, passed at a feeding rate of 40 mt/min, respectively over 4 fibrilling rollers having, according to the previously indicated symbols, the following arrangement of the needles:

|  | (a) (in mm) | (c) (in mm) | (d) (in mm) | Arrang. of needles | $\emptyset$ of roller (in mm) |
|---|---|---|---|---|---|
| First roller | 1.0 | 0.25 | 4.0 | + | 81.5 |
| Second roller | 1.0 | 0.25 | 4.0 | — | 81.5 |
| Third roller | 1.0 | 0.25 | 8.5 | + | 108.0 |
| Fourth roller | 1.0 | 0.25 | 8.5 | — | 108.0 |

The first and second rollers revolve at a peripheral velocity of 61.5 mt/min, while the third and fourth rollers revolve at 100 mt/min.

The 4 fibrilled films, according to the symbols previously specified, show respectively the following characteristics:

|  | (c) (in mm) | (e) (in mm) | (f) (in mm) | (g) (in mm) | $(\beta_0)$ |
|---|---|---|---|---|---|
| First film | 0.25 | 8.4 | 2.0 | 2.6 | $+5°.5$ |
| Second film | 0.25 | 8.4 | 2.0 | 2.6 | $-5°.0$ |
| Third film | 0.25 | 15.0 | 2.0 | 4.3 | $+3°.0$ |
| Fourth film | 0.25 | 15.0 | 2.0 | 4.3 | $-3°.3$ |

The fibrilled films were then superimposed on one another to form one single four-layer ribbon by means of known transmission techniques on obliquely oriented or askew axes, and welded at the edges by means of heated revolving welders, thereby obtaining one single ribbon consisting of 4 superimposed layers.

6

This ribbon was thereupon impregnated by passing it in a vat containing a 5% carboxymethylcellulose solution, and then through squeezing rollers, after which it was sent to the opening and thermostabilizing operations, using the device illustrated in Figure II, fitted with a guide displaying a symmetrical divergence with an $L_1/L_o$ ratio equal to 5.

In that device the ribbon, fed by device (1), was gathered (picked up) by the system of clamp pulling and feeding rollers (4), and was introduced between the pair of guides (2) where said ribbon was gripped by the clamps (3) inserted on the guides by devices (4), at a distance from one another of 10 cm. There was, thus, obtained an assembly of open nets, superimposed on each other, having a width of 50 cm, which was stabilized by heat at 155°C by means of a heating element (5), with a dwell time, at this temperature, of about 1.5 seconds.

In consequence of the stretching of the films, the net of the four films showed a longitudinal shrinkage of 88—90%, which becomes visible through the reciprocal drawing closer to each other of the clamps at the end of the transversal stretching run, to about 9 cm distance from each other.

The examination of the net samples showed the following angular values $\beta_\epsilon$:

| first film | $\beta_\epsilon$=about +30° |
| second film | $\beta_\epsilon$=about −30° |
| third film | $\beta_\epsilon$=about +16° |
| fourth film | $\beta_\epsilon$=about −16° |

The resulting composite net was passed over a calender fitted with heated pressure rollers, heated at a temperature of 120°C, and was then wound up on reels.

Example 2

On a flat head extruder of 120 cm width, there was produced a polypropylene film, using the polymer of Example 1.

The film obtained, 106 cm wide, after listing, showed a thickness of 212 microns. It was stretched at 150°C with a stretch ratio=7, thereby obtaining a film of 80 micron thickness and 40 cm width, which was subdivided into 2 films each 20 cm wide.

The 2 films where then made to pass contemporaneously on two fibrilling rollers similar to the first and second rollers of the preceding example, thereby obtaining the characteristics already previously indicated, and more particularly the angles:

$$+\beta_o=+5°.5$$
$$-\beta_o=-5°.5$$

Other 2 films of the same type were allowed to pass over the fibrilling rollers similar to the third and fourth rollers of the preceding example, obtaining in particular the angles:

$$+\beta_o=+3°.3$$
$$-\beta_o=-3°.3$$

The 4 films were superimposed on each other by pairs, welded together at their edges so as to form 2 ribbons, each consisting of films respectively with angles $\beta_o=\pm5°$, 5 and $\beta_o=\pm3°$, 3, which were then impregnated with carboxymethylcellulose.

These two pairs of fibrilled films were separately stretched transversally 7 times their original width and then thermostabilized with the technique and device described in Example 1, whereafter they displayed a longitudinal shrinkage of respectively 75% and 88%.

At the end of the stretching there were obtained nets, each of which was formed of 2 open fibrilled films characterized by the following values of $\beta_\epsilon$:

| first net: | $\beta_\epsilon=\pm53°$ |
| second net: | $\beta_\epsilon=\pm23°$ |

The 2 nets were superimposed on each other by means of known techniques, welded at the edges and compressed at about 120°C on a calender, thereby obtaining a final single net.

Example 3

On a blowing-head extruder, with a 500 mm Ø spinneret, there was produced a tubular polypropylene film consisting prevailingly of isotactic macromolecules, which had a M.I. equal to 8, admixed with 15% of low-density polyethylene. The film thus obtained, which halved and listed has a width of 102 cm and a thickness of 255 microns, was stretched longitudinally at 155°C with a drawing ratio of 6.5, then obtaining 2 films each 40 cm wide and 100 microns thick.

The two films were, thereupon, contemporaneously fibrilled on 2 fibrilling rollers similar to the

7

first and second rollers of Example 1, thereby obtaining fibrilled film having the same characteristics of the first and second films of that example.

Further two unfibrilled films, equal to the preceding ones, were fibrilled on two rollers (third and fourth rollers) with a distribution of the needles characterized by the following parameters:

| | (a) (in mm) | (c) (in mm) | (d) (in mm) | Needle Distrib. | Roller $\emptyset$ (in mm) |
|---|---|---|---|---|---|
| third roller | 4.8 | 0.8 | 2.5 | + | 71.5 |
| fourth roller | 4.8 | 0.8 | 2.5 | − | 71.5 |

The fibrillation obtained showed the following characteristics:

| | (c) (in mm) | (e) (in mm) | (f) (in mm) | (g) (in mm) | $(\beta_o)$ |
|---|---|---|---|---|---|
| third film | 0.8 | 7.5 | 3.2 | 1.8 | +24° |
| fourth film | 0.8 | 7.5 | 3.2 | 1.8 | −24° |

The films were superimposed separately on each other in pairs and then welded together at their edges, thereby obtaining two (2) ribbons, each formed by two films with respectively $\beta_o=\pm5°.5$ and $\beta_o=\pm24°$. Both ribbons were stretched separately 2.5 times their width by means of the device used in Example 1, thereafter they were thermostabilized, thereby obtaining two pairs of nets each 100 cm wide and each one formed of 2 layers.

After stretching, the nets showed up as being formed of fibrilled films having the following angles $\beta_\epsilon$:

first and second film: $\beta_\epsilon=+15°$
third and fourth film: $\beta_\epsilon=\pm55°$

The two nets were then superimposed on each other so as to form one single net and were then welded together at their edges by means of rotary welders and on three (3) inside rows spaced from each other at equal distances of 25 cm each, by means of spot welder, with the welding spots spaced from each other on the same row by 2.5 cm.

Thereupon the resulting net was compressed at 125°C on a calender and finally wound up on reels.

Example 4

On a flat-headed extruder there was extruded into a water-filled tank a 210 $\mu$ thick polypropylene film having a melt index of 16, additioned with 9% of low density polyethylene.

The extrusion temperatures were around 185°C at the wormscrew, and around 165°C at the extrusion nozzle, while the distance between water and nozzle amounted to about 5 cm. The film was stretched longitudinally at a temperature of 150°C, with a stretch ratio of 7, thus obtaining an oriented film 80 micron thick and 80 cm wide, which was then subdivided into 4 films, each 20 cm wide. The 4 films were thereupon fibrillated by passing, respectively over 4 fibrilling rollers having the same characteristics as the fibrilling rollers of Example 1, and by using the same fibrilling conditions as described in that Example. The fibrilled films thus obtained showed a surface area of 9.6 sq.mt/g.$\mu$. Another set of 4 films was then prepared and fibrilled by the same way and conditions as described above, thus obtaining altogether eight fibrilled films, which were successively superimposed on one another to form one single eight-layer ribbon, and then welded at the edges.

This ribbon was impregnated with a 5% carboxymethylcellulose solution, as described in Example 1, after which it was sent to the opening and thermostabilizing operations by using the device illustrated in Example 1, except that the $L_1/L_o$ ratio (or divergence) was equal to 8 and the thermostabilization temperature was 125°C.

Using a Portland cement, there were prepared composite sheets or plates by alternating layers of nets with layers of cement, in a water/cement ratio equal to 30/100, being careful to arrange the nets in such a way as to maintain constant in each layer the reinforcement direction.

There was thus obtained a sheet or plate sized 48×48 cm, 7 mm thick, using for the purpose of total of 8 nets for a total of 124 grams, thus reaching a percentage of polypropylene net, with respect to the cement, of 8.4% by volume.

After allowing the sheet or plate to rest for 24 hours, it was aged in water at room temperature for 28 days.

Thereupon the sheets or plates were cut up in the reinforcement direction into test pieces or specimen on which were then carried out three-point flexural strength tests according to the UNI 3948 method.

8

The bending occurs along the direction of the reticular reinforcement of the polypropylenic net.

The unitary resistance to bending stresses at break, measured as a mean of 3 specimen drawn at different points of the sheet or plate, amounted to 265 Kg/sq.cm.

Example 5

On a flat-headed extruder there was extruded a polypropylene film with a melt index of 16, additioned with 9% of polyethylene, of the same process and composition as those indicated in Example 4.

After stretching (at stretch ratio=7), the 80 $\mu$ thick film was made to pass with both surfaces over rollers of 80 mm diameter, having a peripheral speed of 90 mt/min, and lined with an abrasive cloth of type 0, with the abrasive particles sized between 100 and 150 micron.

Thereby were thus obtained, on the whole surface of the film, superficial incisions or cuts at a specific density of 150—200 incisions/sq.mm, with an average depth of about 10 $\mu$ and a diameter $\emptyset$ of 20—30 $\mu$, with the formation of fibrils in a specific quantity of 50—100 fibrils/sq.mm, which protrude from the surface of the film and have widths and thicknesses of between 20 and 30 microns, and lengths of between 20 and 200 microns.

Two sets of four films each, obtained from the thus abraded film, were subjected to fibrillation by using the same device and conditions as described in Example 4, thus obtaining eight fibrilled films having a surface area of 18.5 sq.m$^2$/g.$\mu$.

By using these films and operating as in Example 4, there were prepared 8-layer ribbons which were subjected to the opening and stabilizing operations as described in Example 4. Thereupon there were prepared composite net/cement plates, 7 mm thick, similar in composition and preparation to those of Example 4, thereby obtaining test pieces for the flexural resistance tests according to the procedures indicated in said Example 1.

The unitary resistance to bending stress at break of the test pieces amounted to 290 Kg/sq.cm.

Example 6

Following the same procedures as in Example 1, a polypropylene film was extruded, having a melt index of 16, and being additioned with 9% of polyethylene and 0.2% of azodicarbonamide (expanding or bulking product).

The extrusion temperatures were maintained at 180°C on the extruding screw and at 160°C on the nozzle, while the cooling water/nozzle distance amounted to 3 cm. The film after stretching with a stretch ratio of 7 times, showed a thickness of about 80 $\mu$. The film was then abraded on both surfaces, according to the same procedures as those described in Example 5, and then was fibrillated under the same conditions as in Example 1.

Two sets of four films each, obtained from the thus expanded and abraded film, were subjected to fibrillation by using the device and conditions described in Example 4, obtaining eight fibrilled films having a surface area of 48.0 sq.mt/g.$\mu$.

By superimposing these films, and by operating as in Example 4, there were prepared open and thermostabilized 8-layer nets with which, with the same procedures as those described in said example, there were prepared composite cement plates of the same composition.

The microscope examinations of the film before the stretching showed the presence of close bubbles and cavities, 10 to 20 microns wide and 20—400 microns long. On this film, after stretching, the bubbles were found to be elongated by about 7 times while they were only a few microns wide. On the abraded and fibrilled film, the bubbles caused both by the action of the abrasive as well as by the fibrillating pins or needles, gave place to a finely subdivided structure with the appearance of cavities and very fine fibrils, extremely small and very dispersed.

The resistance to flexural stresses of the composite plate specimen, amounted to 340 kg/sq.cm.

Example 7

Example 6 was repeated, with the difference that the fibrillated films of said example were treated with electrical high frequency discharges, with a power of 3000 Watts. The measure of the surfactance degree of the films showed a value of 36 dyne/cm, measured according to ASTM D 2578 method.

By using the same cement and following the same procedures as those of Example 6, there were prepared from such films open and thermostabilized 8-layer nets, and with these latter there were formed composite cement plates.

Because of the improved wettability of the nets, there may also be inserted into the cement a total volume of about 9.5% by volume of nets.

The flexural stress resistance tests indicated a breaking load of 360 Kg/sq.cm.

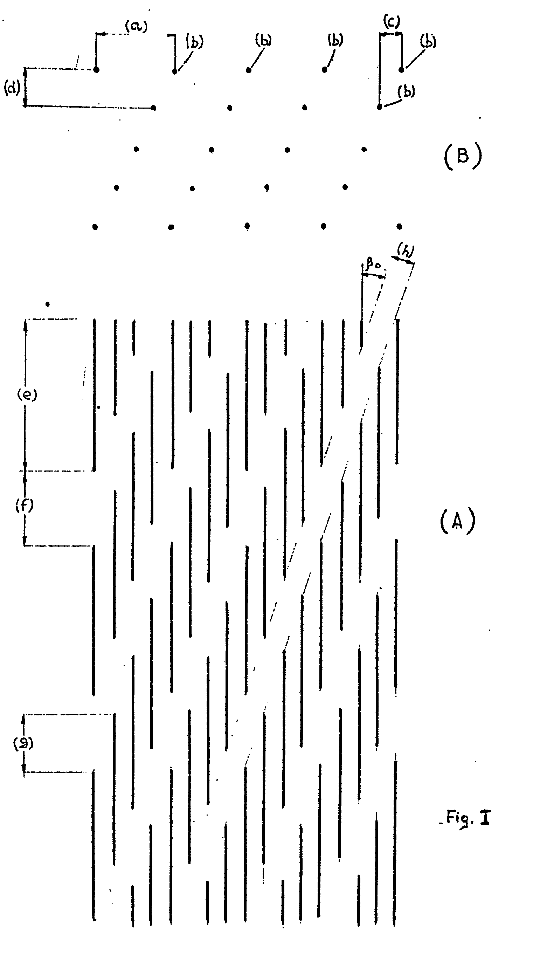

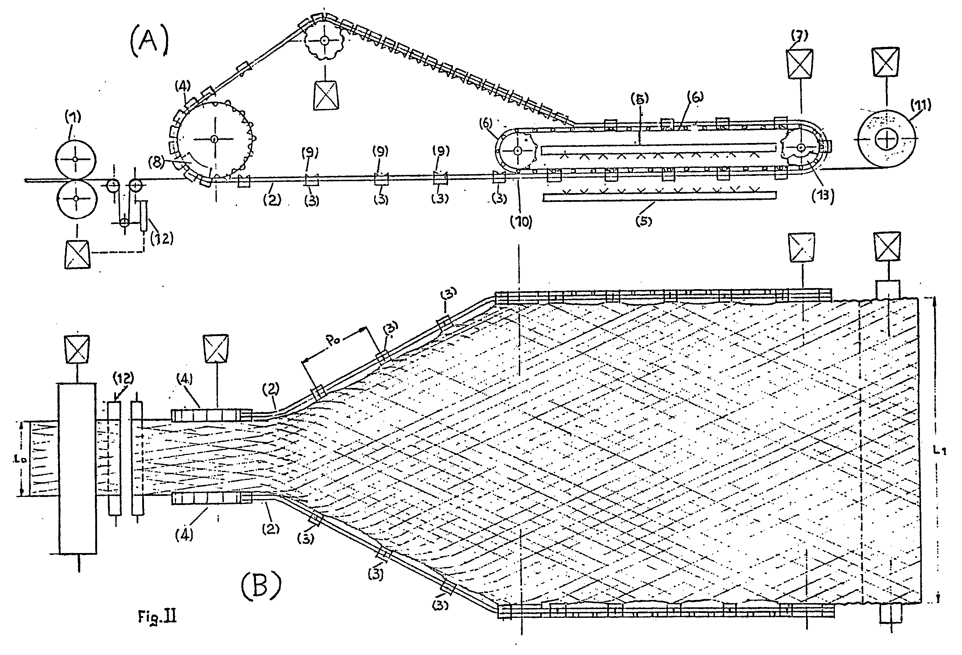

**Claims**

1. Process for the preparation in a continuous run of composite open-net shaped structures, consisting of at least two superimposed fibrilled films, which comprises preparing films formed of at least one synthetic polymer, having a thickness comprised between 35 and 1200 microns (mm) orienting them longitudinally with longitudinal drawing ratios comprised between 3 and 15 with formation of oriented films having a thickness comprised between 15 and 200 microns (mm), fibrilling said films by passing them on surfaces fitted with needles, blades or other means suited for producing slits, superimposing the fibrilled film to form a laminate structure and then subjecting said structure to transversal stretching to open the slits, characterized in that the fibrilling of the films is carried out to form unfibrilled, oblique bands forming an angle $\beta_0$ with the direction of the slits of the film comprised between about 0, 30° and about 50°, in that the composite assembly formed by superimposing the fibrilled films with crossing oblique bands is then transversally stretched, thereby obtaining a rotation of each of the unfibrilled oblique bands, until said bands will form with the original slitting direction a new angle $\beta_\epsilon$ with a value comprised between $\beta_0$ and 80° and in that the thus lateral stretched assembly of films is thermostabilized.

2. Process according to claim 1, characterized in that the synthetic polymer is an olefinic polymer.

3. Process according to claim 1, characterized in that the film contains an expanding or bulking agent which is caused to expand before orienting the film.

4. Process according to claim 3, characterized in that the expansion of the expanding agent produces in the film bubbles or cavities having a diameter not exceeding 50% of the thickness of the film.

5. Process according to any of claims 1 to 4, characterized in that the film after longitudinal orientation, and before fibrilling, is subjected to a superficial abrasion operation.

6. Device for carrying out the opening or transversal stretching of a fibrilled film or assembly of at least two superimposed fibrilled films, comprising

(A) a feeding system (1) for the film,
(B) a pair of diverging annular guides (2) placed next to the feeding system (1) at a spacing from each other equal to the original width of the film and gradually increasing to a value corresponding to the desired width of the stretched film,
(C) a plurality of clamps (3) moving in the guides,
(D) means (4) for advancing the clamps to the guides,
(E) pulling devices (6) for engaging the clamps provided with a positive pulling motion in the feeding direction of the film,
(F) devices (8, 13) for opening the clamps and dragging same to the means for advancing the clamps to the guides, and
(G) a winder (11) for the film or assembly of open films,

characterized in that the clamps (3) slide freely on said guides (2) and exert a longitudinal dragging action on the film only beginning from the pulling devices (6) onward.

**Patentansprüche**

1. Verfahren zum Herstellen von offenmaschigen, aus wenigstens zwei übereinanderliegenden fibrillierten Folien bestehenden Verbundstoffen in einer fortlaufenden Bahn, bei dem Folien aus wenigstens einem Kunstpolymer hergestellt werden, die eine Stärke haben, die zwischen 35 und 1200 Micron ($\mu$m) liegt, diese in Längsrichtung mit Längsstreckverhältnissen orientiert werden, die zwischen 3 und 15 liegen, wobei orientierte Folien gebildet werden, die eine Stärke haben, die zwischen 15 und 200 Micron ($\mu$m) liegt, die Folien dadurch fibrilliert werden, daß sie über Flächen geführt werden, die mit Nadeln, Messern oder anderen Einrichtungen versehen sind, die zum Erzeugen von Schlitzen geeignet sind, die fibrillierten Folien zur Bildung eines Schichtstoffes übereinandergelegt werden und dann dieser Stoff einer Querverstreckung unterworfen wird, um die Schlitze zu öffnen, dadurch gekennzeichnet, daß die Fibrillierung der Folien so durchgeführt wird, daß nicht fibrillierte schräge Bänder gebildet werden, die einen Winkel $\beta_0$ mit der Richtung der Schlitze der Folie bilden, der zwischen etwa 0,30° und etwa 50° liegt, daß die Verbundanordnung, die durch das Übereinanderlegen der fibrillierten Folien mit kreuzenden schrägen Bändern gebildet wird, anschließend querverstreckt wird, wordurch eine Drehung jedes der nicht fibrillierten schrägen Bänder erhalten wird, bis die Bänder mit der ursprünglichen Schlitzrichtung einen neuen Winkel $\beta_\epsilon$ mit einem Wert bilden werden, der zwischen $\beta_0$ und 80° liegt, und daß die in dieser Weise seitlich verstreckte Anordnung der Folien thermostabilisiert wird.

2. Verfahren nach Anspruch 1, dadurch gekennzeichnet, daß das Kunstpolymer eine Olefinpolymer ist.

3. Verfahren nach Anspruch 1, dadurch gekennzeichnet, daß die Folie ein Treib- oder Blähmittel enthält, das dazu gebracht wird, vor der Orientierung der Folie aufzutreiben.

4. Verfahren nach Anspruch 3, dadurch gekennzeichnet, daß das Auftreiben des Treibmittels in der Folie Blasen oder Hohlräume erzeugt, die einen Durchmesser haben, der 50% der Stärke der Folie nicht überschreitet.

5. Verfahren nach einem der Ansprüche 1 bis 4, dadurch gekennzeichnet, daß die Folie nach der Längsorientierung und vor der Fibrillierung einem Abschleifen der Oberfläche unterworfen wird.

6. Vorrichtung zur Durchführung der Öffnung oder Querverstreckung einer fibrillierten Folie oder Anordnung aus wenigstens zwei übereinanderliegenden fibrillierten Folien, die (A) ein Transportsystem (1) für die Folie, (B) ein Paar von divergierenden winkelförmigen Führungen (2), die gleich nach dem Transportsystem (1) im Abstand voneinander angeordnet sind, der gleich der Ursprungsbreite der Folie ist und der allmählich auf einen Wert zunimmt, der der gewünschten Breite der verstreckten Folie entspricht, (C) ein Vielzahl von Klammern (3), die sich in dem Führungen bewegen, (D) Einrichtungen (4) zum Vorbewegen der Klammern zu den Führungen, (E) Zieheinrichtungen (6) zum Ergreifen der Klammern, denen eine zwangsläufige Ziehbewegung in Transportrichtung der Folie gegeben wird, (F) Einrichtungen (8, 13) zum Öffnen der Klammern und zum Schleppen derselben zur Einrichtung zum Vorbewegen der Klammern zu den Führungen und (G) einen Aufwickler (11) für die Folie oder die Anordnung von offenmaschigen Folien umfaßt, dadurch gekennzeichnet, daß die Klammern (3) frei an den Führungen (2) gleiten und eine Längsziehwirkung auf die Folie nur beginnend von den Zieheinrichtungen (6) an ausüben.

## Revendications

1. Procédé pour la préparation en continu de structures réticulaires composites, comportant au moins deux pellicules fibrillées superposées, consistant à préparer des pellicules formées d'au moins un polymère synthétique, présentant une épaisseur comprise entre 35 et 1 200 $\mu$m, à les orienter longitudinalement avec des taux d'étirage longitudinal compris entre 3 et 15 avec formation de pellicules orientées présentant une épaisseur comprise entre 15 et 200 $\mu$m, à fibriller lesdits films en les faisant passer sur des surfaces garnies d'aiguilles, de lames ou d'autres moyens convenables pour produire des entailles, à superposer la pellicule fibrillée pour former une structure laminée et enfin à soumettre ladite structure à un étirage transversal afin d'ouvrir les entailles, caractérisé en ce que la fibrillation des pellicules est mise en oeuvre pour former des bandes obliques non fibrillées formant un angle $\beta_0$ avec la direction des entailles de la pellicule compris entre environ $\frac{1}{2}$° et 50°, en ce que l'assemblage composite formé par la superposition des pellicules fibrillées avec les bandes obliques transversales est alors étiré transversalement, ce qui permet d'obtenir une rotation de chacune des bandes obliques non fibrillées, tandis que lesdites bandes forment avec la direction originale d'entaillage un nouvel angle $\beta_E$ dont la valeur est comprise entre $\beta_0$ et 80°, et en ce que l'assemblage des pellicules ainsi étiré latéralement est thermostabilisé.

2. Procédé selon la revendication 1, caractérisé en ce que le polymère synthétique est un polymère oléfinique.

3. Procédé selon la revendication 1, caractérisé en ce que la pellicule contient un agent expanseur ou gonflant dont on provoque l'expansion avent d'orienter la pellicule.

4. Procédé selon la revendication 3, caractérisé en ce que l'expansion de l'agent expanseur produit dans le film des bubbles ou des cavités présentant un diamètre qui n'excède pas 50% de l'épaisseur du film.

5. Procédé selon l'une quelconque des revendications 1 à 4, caractérisé en ce que la pellicule est soumise, après son orientation longitudinale et avant la fibrillation, à une opération d'abrasion superficielle.

6. Dispositif pour la mise en oeuvre de l'ouverture ou de l'étirage transversal d'une pellicule fibrillée ou d'un assemblage d'au moins deux pellicules fibrillées superposées comportant:

(A) un système d'alimentation (1) pour la pellicule,
(B) deux guides annulaires divergents (2) placés à la suite du système à un espacement l'un de l'autre égal à la largeur originale de la pellicule et augmentation graduellement jusqu'à une valeur correspondant à la largeur désirée de la pellicule étirée,
(C) une pluralité de pinces (3) se déplaçant dans les guides,
(D) des moyens (4) pour faire avancer les pinces sur les guides,
(E) des dispositifs de traction (6), pour engager les pinces soumis à un mouvement de traction positive dans la direction d'alimentation de la pellicule,
(F) des dispositifs (8, 13) pour ouvrir les pinces et les amener jusqu'aux moyens d'avancement des pinces sur les guides,
(G) un enrouleur (11) pour la pellicule ou l'assemblage de pellicules reticulées.

caractérisé en ce que les pinces (3) glissen librement sur lesdits guides (2) et exercent une action de traction longitudinale sur la pellicule, cette action ne commençant qu'à partir des dispositifs de traction (6).

(B)

(A)

Fig. I

(A)

(B)

Fig.II